# EUROPEAN PATENT SPECIFICATION

(11) **EP 2 075 152 B1**
(45) Date of publication and mention of the grant of the patent: **11.05.2011**
(21) Application number: 08254067.5
(22) Date of filing: 18.12.2008
(51) Int. Cl.: B60K 31/00, B62K 23/04

(54) **Control device for straddle-type vehicle and straddle-type vehicle**
Steuervorrichtung für Grätschsitz-Fahrzeug und Grätschsitz-Fahrzeug
Dispositif de contrôle pour véhicule de type à enfourcher et véhicule de type à enfourcher

(30) Priority: 26.12.2007 JP 2007335094
(43) Date of publication of application: 01.07.2009
(73) Proprietor: Yamaha Hatsudoki Kabushiki Kaisha, Shizuoka-ken Shizuoka 438-8501 (JP)
(72) Inventor: Tozuka, Harutomo, Iwata-shi Shizuoka-ken 438-8501 (JP); Samoto, Haruhiko, Iwata-shi Shizuoka-ken 438-8501 (JP); Maebashi, Kosei, Iwata-shi Shizuoka-ken 438-8501 (JP); Fujita, Hirokazu, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 777 150
- WO-A-99/20482
- DE-A1- 10 109 814
- US-A1- 2003 047 372

## Description

### Technical Field

The present invention relates to a control device for a straddle-type vehicle that controls the output of a driving source to drive a straddle-type vehicle and a straddle-type vehicle mounted with the control device.

### Background Art

Of the control devices for a straddle-type vehicle, a device for controlling constant-speed running is disclosed in Japanese Unexamined Patent Publication No. 2007-113416 and Japanese Unexamined Patent Publication No. 2007-137186.

EP 1 777 150 discloses all features of preamble of claim 1.

Japanese Unexamined Patent Publication No. 2007-137186 discloses a technology in the related art in a constant-speed running control device of a straddle-type vehicle. The technology is constructed in the following manner: that is, when a vehicle speed desired by a rider is reached, a constant-speed running control is started by operating a vehicle speed setting switch and is temporarily released only by returning an accelerator (which is also referred to as a throttle grip, an accelerator grip, or an accelerator) in a closing direction (see paragraph 0002 in the same patent document).

Moreover, in the same patent document, as a constant-speed running control device for performing constant-speed running control is disclosed a control device that sets a target throttle opening according to an instructed throttle opening instructed through the accelerator by the rider and which controls an actual throttle opening to the target throttle opening. The device is constructed in the following manner: that is, for example, when any one of the instructed throttle opening and the target throttle opening is close to (is in a specified relationship with) an actual throttle opening and when an amount of change per unit time of the instructed throttle opening is compared with a threshold value and the amount of change is the threshold valve or more in a negative direction (a release condition is satisfied), the device switches the constant-speed running control to a throttle target opening control. Thus, this patent document discloses the fact that: with this construction, even if the rider does not return the accelerator to a position where a throttle valve is totally closed, a rider's intension of decreasing the vehicle speed can be detected; and hence an unnecessary decrease in the number of revolution of an engine, that is an unnecessary decrease in the output of the engine, is not caused and a running feeling is not impaired (see, for example, paragraphs 0028 and 0031 in the same patent document) .

Furthermore, Japanese Unexamined Patent Publication No. 2007-113416 discloses the construction in which, when a rider operates a throttle grip to a return side in an auto-cruise state, a switching mode of a cancel switch is changed and a control unit releases the auto-cruise state according to a change in the switching state; in other words, when the rider operates the accelerator to the return side in the auto-cruise state, the auto-cruise state is released (see, for example, claim 7 and paragraphs 0037, 0046, and 0047 in the same patent document).

In the driving of a straddle-type vehicle, a rider operates an accelerator in a state where the rider grips the accelerator while having the air pressure applied to his body, so that when the rider drives the straddle-type vehicle at a constant speed for a long time, the load of air pressure applied to the rider becomes large. A constant-speed running control is control that facilitates the rider's operation of the straddle-type vehicle to decrease the load. The constant-speed running control is used during the driving of a straddle-type vehicle on a road, for example, a highway without a traffic signal and in which the straddle-type vehicle is supposed to be run at a constant speed.

By the way, in the control device for a straddle-type vehicle disclosed in the above-mentioned Japanese Unexamined Patent Publication No. 2007-137186, when the amount of change per unit time in the instructed throttle opening instructed through the accelerator by the rider is compared with the threshold value and the amount of change is the threshold value or more in the negative direction, the constant-speed running control is switched to the throttle target opening control. Moreover, also in the above-mentioned Japanese Unexamined Patent Publication No. 2007-113416, when the rider operates the accelerator to the return side in the auto-cruise state, the auto-cruise state is released.

However, an inconvenience is caused by the construction in which when the rider operates the accelerator in the closing direction in the auto-cruise state, the constant-speed running control is released. For example, when the rider drives a vehicle under the constant-speed running control and overtakes another vehicle running at a vehicle speed lower than the target vehicle speed of the constant-speed running control, there is a case where the rider decelerates the vehicle speed so as to meet the speed of the another vehicle and then drives the vehicle after the another vehicle so as to meet the speed of the another vehicle. In this case, when the rider overtakes the another vehicle running at the vehicle speed lower than the target vehicle speed of the constant-speed running control, there is a possibility that the rider will operate the accelerator (throttle grip) in the closing direction like the ordinary operation of the accelerator. In the situation like this, there is a possibility that the constant-speed running control will be released. When the constant-speed running control is unexpectedly released during the constant-speed running control in this manner, the rider needs to again perform the operation of the constant-speed running control. The present inventor thought that such an operation is a troublesome operation for the rider of the straddle-type vehicle.

### Summary

A control device for a straddle-type vehicle according to the present invention includes: a first storage means for storing a target vehicle speed for constant-speed running; and a first detection means for detecting that an accelerator is operated in a further closing direction from a totally closed position of the accelerator. Further, the control device for a straddle-type vehicle includes a deceleration processing means that decreases the target vehicle speed stored in the first storage means when the first detection means detects the operation during the constant-speed running control.

According to this control device for a straddle-type vehicle, when it is detected that the accelerator is operated in the further closing direction from the totally closed position of the accelerator, the target vehicle speed of the constant-speed running is decreased. According to the control device for a straddle-type vehicle, when a rider intends to decrease the vehicle speed during constant-speed running, the rider can perform the operation while gripping the accelerator as usual and the operation of closing the accelerator in the further closing direction from the totally closed position is thought to be an extension of the usual operation of the accelerator at the time of decreasing the vehicle speed, so that the operability of the straddle-type vehicle is extremely excellent. Further, even when the rider operates the accelerator in the closing direction during constant-speed running, it is possible to prevent the constant-speed running control from being unexpectedly released.

### Brief Description of the Drawings

Embodiments of the invention are described hereinafter, by way of example only, with reference to the accompanying drawings.
Fig. 1 is a block diagram to show a control device for a straddle-type vehicle according to one embodiment of the present invention
Fig. 2 is a diagram to show the straddle-type vehicle according to the one embodiment of the present invention
Fig. 3 is a flow chart to show the control flow of a deceleration processing in a constant-speed running control for the straddle-type vehicle according to the one embodiment of the present invention Detailed Description

Hereinafter, a control device for a straddle-type vehicle according to embodiments of the present invention will be described with reference to the accompanying drawings. In the respective drawings, the members and parts performing the same functions are denoted by the same reference symbols. Moreover, the present invention is not limited to the following embodiment.

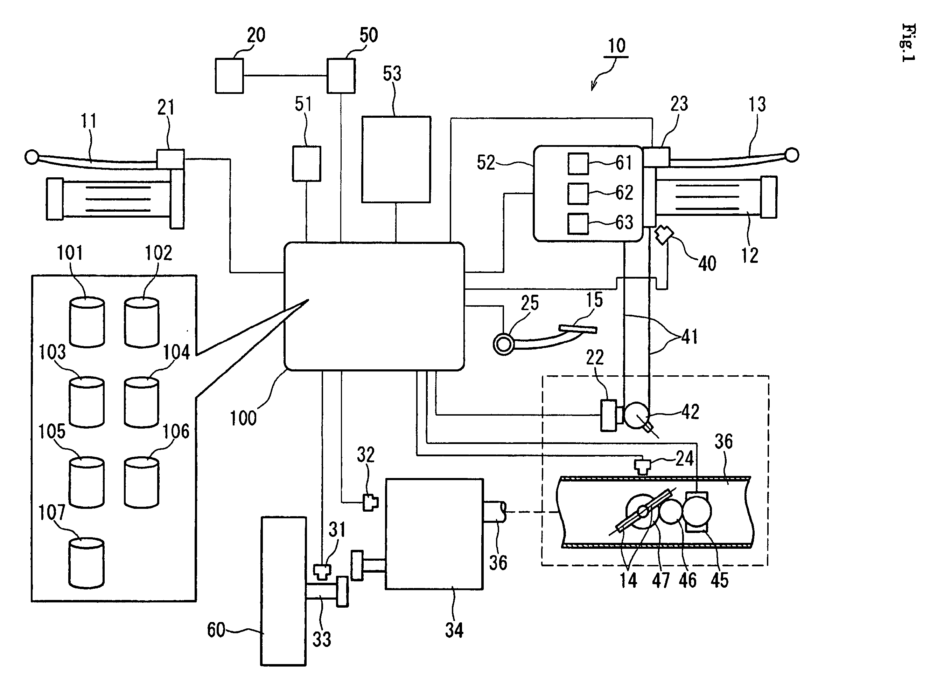

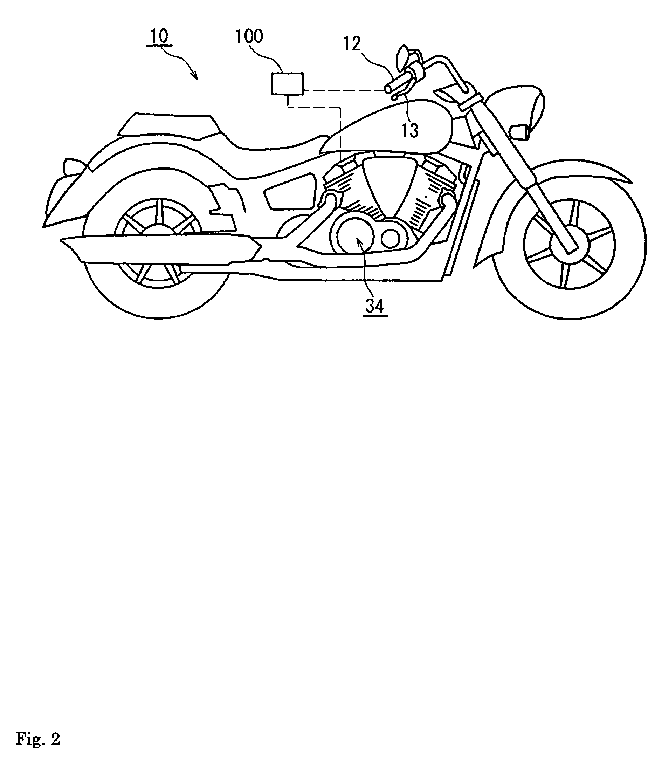

A control device 100 for a straddle-type vehicle, as shown in Fig. 1 and Fig. 2, is mounted on a straddle-type vehicle 10. In this embodiment, the straddle-type vehicle 10, as shown in Fig. 1, is provided with a clutch lever, an accelerator 12, a front brake lever 13, a throttle valve 14, a rear brake pedal 15, and the like.

The clutch lever 11, the accelerator 12, the front brake lever 13, the throttle valve 14, and the rear brake pedal 15 are provided with sensors 21 to 25 for detecting their operations, respectively. Moreover, the straddle-type vehicle 10 is provided with a vehicle speed sensor 31 and an engine revolution speed sensor 32. The vehicle speed sensor 31 is a sensor for detecting the vehicle speed of the straddle-type vehicle 10 and detects the revolution speed of an axle 33 of a rear wheel 60 in this embodiment. The engine revolution speed sensor 32 is a sensor for detecting the revolution speed of an engine 34 (driving source) and detects the revolution speed of a crankshaft of the engine 34 in this embodiment.

The control device 100 for a straddle-type vehicle is provided with an input part (input means - not shown) to which detection signals detected by the respective sensors 21 to 25, 31, and 32 are inputted. The respective sensors 21 to 25, 31, and 32 are connected to the input part so as to communicate. With this, the detection signals detected by the respective sensors 21 to 25, 31, and 32 are sent to the control device 100 for a straddle-type vehicle.

In this embodiment, the control device 100 for a straddle-type vehicle is an electronic processing device and is provided with: an operation means constructed of a MPU or a CPU having an operating function; and a storage means constructed of a non-volatile memory or the like. The control device 100 for a straddle-type vehicle is constructed so as to realize a specified function by a previously stored program. A throttle valve opening control part 103 (output control part/output control means), a first detection part (first detection means) 104, and a deceleration processing part (deceleration processing means) 105, which will be described later, are embodied by programs, and make the control device 100 for a straddle-type vehicle realize specified functions, respectively.

In this embodiment, the driving source 34 of the straddle-type vehicle is constructed of an engine of an internal combustion engine, and its output is adjusted by the opening of the throttle valve 14. That is, the throttle valve 14 is disposed in an intake passage 36 of the engine 34, and the amount of flow of an air-fuel mixture flowing into the engine 34 is adjusted by the opening of the throttle valve 14. This straddle-type vehicle 10 is mounted with an electronic throttle in which the opening of the throttle valve 14 is electronically controlled by a control device.

In this embodiment, when an accelerator 12 is turned, a pulley 42 connected to the accelerator 12 by a wire 41 is driven and rotated. The pulley 42 is provided with an accelerator position sensor 22 for detecting the amount of rotation of the pulley 42. The control device 100 for a straddle-type vehicle detects the amount of rotation of the pulley 42 and the amount of operation of the accelerator 12 on the basis of the detection signal detected by the acceleration position sensor 22.

The control device 100 for a straddle-type vehicle detects the opening of the throttle valve 14 on the basis of the detection signal detected by the throttle position sensor 24. In this embodiment, the control device 100 for a straddle-type vehicle computes a target value of the opening (target throttle opening) of the throttle valve 14 along a previously set program on the basis of the detection signal detected by the acceleration position sensor 22 and the information of the vehicle speed sensor 31 and the engine revolution speed sensor 32. The control device 100 for a straddle-type vehicle sends an operation signal to an actuator 45 to control the opening of the throttle valve 14 so as to bring the opening of the throttle valve 14 to the target throttle opening. In this embodiment, the actuator 45 is a motor and rotates the rotary shaft 47 of the throttle valve 14 via a gear 46 to operate the opening of the throttle valve 14.

In this manner, in this embodiment, the electronic throttle is employed and the opening of the throttle valve 14 is controlled by the control device 100 for a straddle-type vehicle. Further, the control device 100 for a straddle-type vehicle performs a constant-speed running control. The constant-speed running control is also referred to as "a cruise control" in some cases.

In this embodiment, the control device 100 for a straddle-type vehicle is provided with a first storage part (first storage means) 101, a throttle valve opening control part (throttle valve opening control means) 103, a first detection part (first detection means) 104, and a deceleration processing part (deceleration processing means) 105. Moreover, in this embodiment, the straddle-type vehicle 10 is provided with detection means 40 for detecting that the accelerator 12 is operated in a further closing direction from the totally closed position of the accelerator 12. In this embodiment, the detection means 40 is fixed to the accelerator 12 and is constructed of pressure detection means (pressure sensor, in this embodiment) for detecting the operation and the operating force of the accelerator 12. The pressure sensor 40 performs the function of operation detection means for detecting the accelerator 12 being operated in the further closing direction from the totally closed position of the accelerator 12 and the function of operating force detection means capable of detecting the magnitude of the operating force of the operation. The pressure sensor 40 is connected to the control device 100 (input part, not shown) for the straddle-type vehicle, and the detection signal detected by the pressure sensor 40 is sent to the control device 100 for a straddle-type vehicle. Here, the detection means for performing a function as the operation detection means and the detection means for performing a function as operating force detection means may be disposed as separate detection means. For example, the detection means for performing the function as the operation detection means may be a switch for detecting that the accelerator 12 is operated in the further closing direction from the totally closed position of the accelerator 12.

Moreover, in this embodiment, the straddle-type vehicle 10 is provided with: a main switch 50 for starting the whole system of the straddle-type vehicle 10; a starting switch 51 of the constant-speed running control; an operation part (operation means) 52 for operating the constant-speed running control, and a display part (display means) 53 for displaying the state of the constant-speed running control. In this embodiment, the starting switch 51 of the constant-speed running control is a switch for starting the constant-speed running control (cruise control). In this embodiment, the main switch 50 for starting the whole system of the straddle-type vehicle 10 is turned on or off by turning a key 20 of the straddle-type vehicle 10. The straddle-type vehicle 10 is constructed as follows: that is, even if the main switch 50 is on, when the starting switch 51 of the constant-speed running control is off, the constant-speed running control is not performed; and only when the main switch 50 is on and the starting switch 51 of the constant-speed running control is on, the constant-speed running control is performed. The operation part 52 is disposed near the accelerator 12 and is provided with three switches 61 to 63.

When the constant-speed running control is not active, a first switch (acceleration/vehicle speed setting switch) 61 functions as an operating switch for activating, or performing, the constant-speed running control and for setting the target vehicle speed of the constant-speed running control. Moreover, when the constant-speed running control is active, the first switch 61 functions as an operating switch for accelerating the target vehicle speed of the constant-speed running control.

When the constant-speed running control is not active, a second switch (deceleration/ resume switch) 62 functions as an operating switch for making the target vehicle speed of the constant-speed running control a target vehicle speed at the immediately preceding constant-speed running control. Moreover, the constant-speed running control is active, the second switch 62 functions as an operating switch for decelerating the target vehicle speed of the constant-speed running control.

A third switch (cancel switch) 63 functions as an operating switch for releasing the constant-speed running control and returning the constant-speed running control to a normal running control. The above-mentioned respective switches 51, and 61 to 63 are connected to the control device 100 for a straddle-type vehicle, and the input signal is sent to the control device 100 for a straddle-type vehicle.

The first storage part 101 of the control device 100 for a straddle-type vehicle stores the target vehicle speed of the constant-speed running control. In this embodiment, when the starting switch 51 of the constant-speed running control is off, the control device 100 for a straddle-type vehicle is in a state where the constant-speed running control cannot be performed, and the opening of the throttle valve 14 is controlled on the basis of the operation of the accelerator 12, whereby the vehicle speed is adjusted. When the starting switch 51 of the constant-speed running control is turned on, there is brought about a state where the constant-speed running control can be performed.

When the first switch 61 or the second switch 62 is operated in a state where the starting switch 51 of the constant-speed running control is on, the target vehicle speed of the constant-speed running control is set to the first storage part 101.

In this embodiment, when the constant-speed running control is not active in a state where the starting switch 51 of the constant-speed running control is on, if the first switch 61 is operated, the vehicle speed detected by the vehicle speed sensor 31 when the first switch 61 is operated is stored in the first storage part 101 and becomes the target vehicle speed of the constant-speed running control. Moreover, when the constant-speed running control is not active in a state where the starting switch 51 of the constant-speed running control is on, if the second switch 62 is operated, first, the target vehicle speed of the immediately preceding constant-speed running control which is stored in the first storage part 101 is stored separately in the second storage part (second storage means) 102. Then, when the second switch 62 is operated, the vehicle speed detected by the vehicle speed sensor 31 is stored in the first storage part 101 and the constant-speed running control is started. Thereafter, the target vehicle speed of the constant-speed running control stored in the first storage part 101 is gradually updated in such a way that the target vehicle speed of the constant-speed running control becomes the target vehicle speed of the immediately preceding constant-speed running control stored in the second storage part 102, whereby the target vehicle speed of the constant-speed running control stored in the first storage part 101 is gradually brought close to the target vehicle speed of the immediately preceding constant-speed running control stored in the second storage part 102. With this, the target vehicle speed of the constant-speed running control stored in the first storage part 101 is finally brought to the final target vehicle speed of the constant-speed running control stored in the second storage part 102.

Moreover, when the constant-speed running control is active in a state where the starting switch 51 of the constant-speed running control is on, if the first switch 61 is operated, the target vehicle speed of the constant-speed running control stored in the first storage part 101 is rewritten to a higher vehicle speed. With this, the target vehicle speed of the constant-speed running control is accelerated and hence the running speed in the constant-speed running control is increased. Moreover, when the constant-speed running control is active, if the second switch 62 is operated, the target vehicle speed of the constant-speed running control stored in the first storage part 101 is rewritten to a lower vehicle speed. With this, the target vehicle speed in the constant-speed running control is decelerated and hence the running speed in the constant-speed running control is decreased.

Next, the throttle valve opening control part 103 controls the opening of the throttle valve 14 in such a way that the straddle-type vehicle 10 constantly runs at the target vehicle speed stored in the first storage part 101. The throttle valve opening control part 103 receives the input of the vehicle speed detected by the vehicle speed sensor 31 and computes a target throttle opening in such a way that a vehicle speed becomes the target vehicle speed. Then, the throttle valve opening control part 103 outputs an operating signal in such a way that the opening of the throttle valve 14 becomes the target throttle opening to operate the actuator 45 to thereby adjust the opening of the throttle valve 14.

In this embodiment, the throttle valve opening control part 103 operates the actuator 45 on the basis of the input from the vehicle speed sensor 31 and the throttle position sensor 24 in such a way that the vehicle speed detected by the vehicle speed sensor 31 is brought to the target vehicle speed stored in the first storage part 101. The straddle-type vehicle 10 can be run at a constant speed by the control of the throttle valve opening control part 103. According to this constant-speed running control, even if a rider does not perform a fine adjustment of the accelerator 12, the opening of the throttle valve 14 can be automatically adjusted, so that the load of the rider can be reduced when the drives the vehicle on a highway or the like.

Here, in this embodiment, when not only the third switch 63 of the operation part 52 is operated but also the clutch lever 11, the front brake lever 13, or the rear brake lever 15 is operated, the constant-speed running control is released. That is, the clutch lever 11, the front brake lever 13, or the rear brake lever 15 can be operated when the rider decelerates the straddle-type vehicle, and when any one of these parts is operated, the constant-speed running control is released. When the constant-speed running control is released in this manner, for the rider to perform the constant-speed running control again, the rider needs to operate the first switch 61 and the second switch 62. Moreover, as described above, the operation part 52 is provided with a switch (deceleration switch: second switch 62) for reducing the target vehicle speed of the constant-speed running control by an easier operation during the constant-speed running control.

This embodiment is constructed in such a way that during the constant-speed running control, the target vehicle speed of the constant-speed running control can be decreased by an easier operation. That is, this embodiment is constructed in such a way that when the accelerator 12 is operated in a further closing direction from the totally closed position of the accelerator 12 during the constant-speed running control, the target vehicle speed of the constant-speed running control can be decreased. Hereinafter, the first detection part 104 and the deceleration processing part 105 will be described.

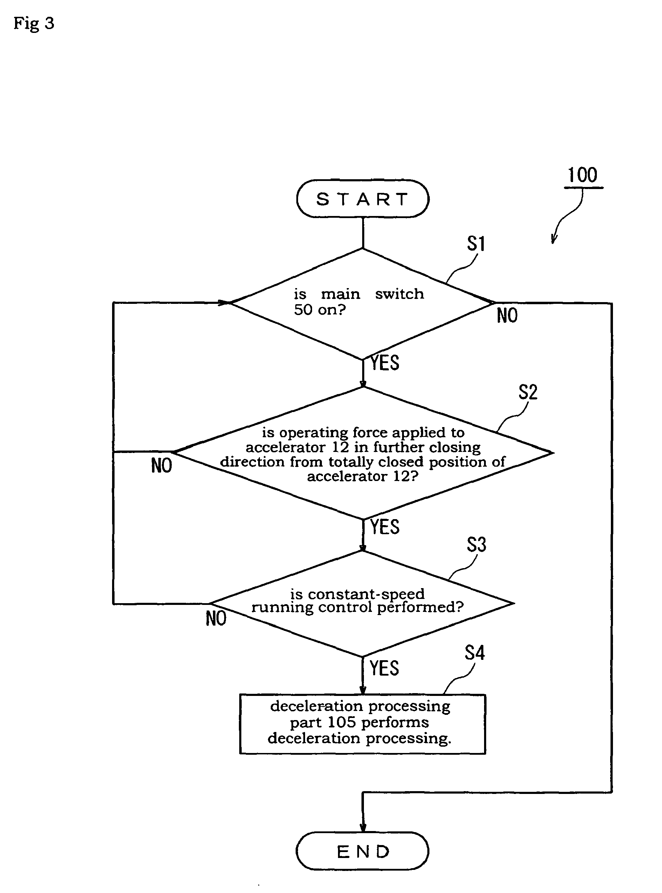

Next, the first detection part 104 detects that the accelerator 12 is operated in the further closing direction from the totally closed position of the accelerator 12. In this embodiment, the first detection part 104 receives the detection signal of the pressure sensor 40 (operation detection means) and detects that the accelerator 12 is operated in the further closing direction from the totally closed position of the accelerator 12. Here, in this embodiment, the control device 100, as shown in Fig. 3, is started (START) when the main switch 50 for starting the whole system of the straddle-type vehicle 10 is turned on (S1). When the main switch 50 is turned on (YES), the first detection part 104 always detects whether or not the accelerator 12 is operated in the further closing direction from the totally closed position of the accelerator 12. In this embodiment, the control device 100 is provided with a determination part (determination means) (S2) for determining whether or not the accelerator 12 is operated in the further closing direction from the totally closed position of the accelerator 12. When the main switch 50 is turned on (YES), the determination part (S2) detects whether or not the accelerator 12 is operated in the further closing direction from the totally closed position of the accelerator 12. Then, when it is determined in the determination part (S2) that the accelerator 12 is operated in the further closing direction from the totally closed position of the accelerator 12 (YES), it is further determined (S3) whether or not the constant-speed running control is performed. When it is determined in the determination part (S3) that the constant-speed running control is performed (YES), the control device 100 performs a deceleration processing by the deceleration processing part 105 (S4). When it is determined in the determination part (S2) that the constant-speed running control is not performed (NO), the input of the operation (S1) is neglected. In this embodiment, when it is determined in the determination part (S1) that the main switch 50 is turned off, the control flow of the control device 100 is finished (END).

Next, when the first detection part 104 detects that the accelerator 12 is operated in the further closing direction from the totally closed position of the accelerator 12 (S1), the deceleration processing part 105 decreases the target vehicle speed stored in the first storage part 101 (S3). That is, when the target vehicle speed stored in the first storage part 101 is decreased, the running speed of the straddle-type vehicle 10 controlled by the constant-speed running control is decreased.

In this embodiment, the deceleration processing part 105 is constructed in such a way as to decrease the target vehicle speed stored in the first storage part 101 during a period of time when the first detection part 104 detects that the accelerator 12 is operated in the further closing direction from the totally closed position of the accelerator 12. In this case, it suffices that the deceleration processing part 105 is constructed in such a way as to decrease the target vehicle speed stored in the first storage part 101 at a previously determined rate with respect to time, for example, during a period of time when the first detection part 104 detects the above-mentioned operation. Here, the deceleration processing part 105 may change a rate at which the target vehicle speed is decreased according to the magnitude of the operating force.

In this embodiment, as described above, when the first detection part 104 detects that the accelerator 12 is operated in the further closing direction from the totally closed position of the accelerator 12 during the constant-speed running control, the control device 100 for a straddle-type vehicle decreases the target vehicle speed stored in the first storage part 101. In the operation of the straddle-type vehicle 10, it does not happen normally that the accelerator 12 is operated in the further closing direction from the totally closed position of the accelerator 12. By detecting that the accelerator 12 is operated in the further closing direction from the totally closed position of the accelerator 12, the rider's intention of decreasing the vehicle can be detected. Moreover, according to this control device 100 for a straddle-type vehicle, when the rider intends to decelerate the vehicle while the rider drives the vehicle under the constant-speed running control, the rider can operate the accelerator 12 in a state where the rider grips the accelerator 12 as usual, so the control device 100 for a straddle-type vehicle can realize extremely high operability.

Further, in this case, when the rider intends to decelerate the vehicle, the rider unusually returns the accelerator 12 (that is, the accelerator 12 is closed). The operating of the accelerator 12 in the further closing direction from the totally closed position of the accelerator 12 can be performed as an extension of the operation of returning the accelerator 12. Moreover, because the operating of the accelerator 12 in the further closing direction from the totally closed position of the accelerator 12 can be performed as the extension of the operation of returning the accelerator 12, the rider can easily operate the accelerator 12 when the rider intends to decelerates the vehicle. In other words, the detecting of the rider's intension of decelerating the vehicle during the constant-speed running control by detecting that the rider operates the accelerator 12 in the further closing direction from the totally closed position of the accelerator 12 is one of an optimum method for an operating input method for a straddle-type vehicle. According to this control device 100 for a straddle-type vehicle, it is possible to provide a straddle-type vehicle having extremely excellent operability in a straddle-type vehicle for which the constant-speed running control is performed.

Still further, in this embodiment, the deceleration processing part 105 decreases the target vehicle speed stored in the first storage part 101 during a period of time when the first detection part 104 detects the above-mentioned operation. That is, while the rider operates the accelerator 12 in the further closing direction from the totally closed position of the accelerator 12, the deceleration processing part 105 decreases the target vehicle speed. With this, when the rider operates the accelerator 12 in the further closing direction from the totally closed position of the accelerator 12 to decrease the target vehicle speed of the constant-speed running control to thereby bring the vehicle speed of the straddle-type vehicle to a suitable value, if the rider stops the operation, the constant-speed running control is performed at the vehicle speed and hence the rider can easily adjust the vehicle speed of the constant-speed running control.

In this embodiment, the deceleration processing part 105 is constructed in such a way as to decrease the target vehicle speed stored in the first storage part 101 at a previously specified deceleration while the first detection part 104 detects the above-mentioned operation. For example, when it is assumed that the deceleration is a, the deceleration processing part 105 can decelerate the vehicle by a speed of (a x t) with respect to the period of time t during which the first detection part 104 detects that the accelerator 12 is operated in the further closing direction from the totally closed position of the accelerator 12. For example, it is possible to make the setting of decreasing the target vehicle speed by 5 km/hr with respect to the operating time of 1 second during which the accelerator 12 is being operated in the further closing direction from the totally closed position of the accelerator 12. Further, in the case of constructing the deceleration processing part 105 in this manner, the rate at which the vehicle speed is decreased with respect to time is constant for the rider, so that the rider can easily take the timing when the rider stops the operation.

Furthermore, the deceleration processing part 105 can be also constructed in such a way that the rate at which the target vehicle speed is decreased with respect to time is changed according to the magnitude of the operating force for operating the accelerator 12 in the further closing direction from the totally closed position of the accelerator 12. For example, the deceleration processing part 105 can be also constructed in such a way that the rate at which the target vehicle speed is decreased with respect to time is increased by increasing the operating force. With this, when the rider wants to decelerate the vehicle more quickly, it suffices that the rider applies a large operating force to the accelerator 12, whereas when the rider wants to decelerate the vehicle more slowly, it suffices that the rider applies a small operating force to the accelerator 12, which results in improving the operability of decelerating the vehicle. With this, the rider can easily decelerate the vehicle more smoothly and in the manner as the rider intends. Thus, the rider can be provided with an excellent operability.

In this regard, in this case, it suffices that the control device 100 for a straddle-type vehicle is provided with: a second detection part (second detection means) 106 for detecting the magnitude of the operating force; and a first setting part 107 for setting the relationship between the magnitude of the operating force detected by the second detection part 106 and the rate at which the target vehicle speed is decreased with respect to time according to the magnitude of the operating force.

It suffices that the second detection part 106 is constructed so as to detect the magnitude of the operating force, for example, on the basis of the detection signal of the above-mentioned pressure detection means (operating force detection means) 40. Moreover, it suffices that the first setting part 107 previously stores the relationship between the magnitude of the operating force detected by the second detection part 106 and the rate at which the target vehicle speed is decreased with respect to time according to the magnitude of the operating force in the storage means of the control device 100 for a straddle-type vehicle. The relationship can be arbitrarily set in advance. It suffices to change the rate at which the target vehicle speed is decreased with respect to time according to the magnitude of the operating force detected by the second detection part 106 on the basis of the relationship between the magnitude of the operating force detected by the second detection part 106 and the rate at which the target vehicle speed is decreased with respect to time according to the magnitude of the operating force, the relationship being previously set by the first setting part 107. The second detection part 106 and the first setting part 107, which have been described above, are only examples to embody the construction of the control device 100 for a straddle-type vehicle in such a way that the rate at which the target vehicle speed is decreased with respect to time according to the magnitude of the operating force, and the construction of the control device 100 for a straddle-type vehicle is not limited to this construction.

Up to this point, the control device 100 for a straddle-type vehicle according to one embodiment of the present invention and the straddle-type vehicle according to the one embodiment of the present invention have been described. However, the control device 100 for a straddle-type vehicle and the straddle-type vehicle according to the present invention are not limited to the above-mentioned embodiment.

For example, the deceleration processing part 105 may be constructed in such a way as to decrease the target vehicle speed at a rate that is previously determined with respect to time while the first detection part 104 detects the above-mentioned operation. That is, it is assumed that the rate is b % and that the present target vehicle speed is s. In this case, the target vehicle speed can be decreased by a speed of s (km/h) × b × 0.01 × t(s) with respect to the period of time t(s) during which the first detection part 104 detects that the accelerator 12 is operated in the further closing direction from the totally closed position of the accelerator 12. Specifically, for example, it is assumed that the rate is 5 % and that the present target vehicle speed is 100 km/h. In this case, the target vehicle speed is decreased by 5 % per the period of time of 1 second during which the accelerator 12 is operated in the further closing direction from the totally closed position of the accelerator 12. In other words, the following control can be realized: in the first period of time of 1 second, the target vehicle speed is decreased by a speed of 5 km/h (= 100 (km/h) x 5 x 0.01 x 1(s)), thereby being decreased to 95 km/h; then, in the next period of time of 1 second, the target vehicle speed is decreased by a speed of 4.75 km/h (= 95 (km/h) x 5 x 0.01 x 1(s)), thereby being decreased to 90.25 km/h; and thereafter, ditto. Even in this construction, the rider can easily predict the rate at which the vehicle speed is decreased with respect to time, so that the rider can easily take the timing when the rider stops the operation.

Moreover, the deceleration processing part 105 may be constructed in such a way that every time the first detection part 104 detects that the accelerator 12 is operated in the further closing direction from the totally closed position of the accelerator 12, the target vehicle speed stored in the first storage part 101 is decreased. In this case, the deceleration processing part 105 may be constructed, for example, in such a way that every time the first detection part 104 detects the above-mentioned operation, the target vehicle speed stored in the first storage part 101 is decreased by a previously determined speed. That is, for example, the deceleration processing part 105 can make the setting of decreasing the target vehicle speed by 1 km/h to 2 km/h every time the rider operates the accelerator 12 in the further closing direction from the totally closed position of the accelerator 12. Also in this case, the rider can easily adjust the target vehicle speed. In this regard, as for how much the deceleration processing part 105 deceases the target vehicle speed every time the rider operates the accelerator 12 in the further closing direction from the totally closed position of the accelerator 12, it suffices that the magnitude of the decrease in the target speed is set to a value in consideration of the operability of the straddle-type vehicle.

Still further, for example, the deceleration processing part 105 may be constructed in the following manner: that is, when the deceleration processing part 105 decreases the target vehicle speed stored in the first storage part 101 every time the first detection part 104 detects the above-mentioned operation, the deceleration processing part 105 changes the degree of decreasing the target vehicle speed according to the magnitude of the operating force of the operation. Specifically, it is also recommendable for the deceleration processing part 105 to store an arbitrary correlation, which is determined between the magnitude of the operating force and the degree of decreasing the target vehicle speed, in a storage part and to set the degree of decreasing the target vehicle speed on the basis of the correlation. Moreover, it suffices to detect the magnitude of the operating force by the second detection part 106. For example, the deceleration processing part 105 can be constructed in the following manner: every time the accelerator 12 is operated in the further closing direction from the totally closed position of the accelerator 12, the second detection part 106 detects the magnitude of an operating force; and according to the magnitude of the operating force detected by the second detection part 106, when a large operating force is inputted, the deceleration processing part 105 decreases the target vehicle speed greatly, whereas when a small operating force is inputted, the deceleration processing part 105 decreases the target vehicle speed slightly. In this case, for example, as for the magnitude of the operating force, it suffices to set one or plural threshold values previously and to divide the magnitude of the operating force stepwise according to the threshold values. It suffices to previously set the magnitude of the operating force and the amount of decease in the target vehicle speed stepwise in such a way that when the operating force is large, the amount of decrease in the target vehicle speed becomes large. Further, the arbitrary correlation determined between the magnitude of the operating force and the degree of decreasing the target vehicle speed does not need to be stepwise but may be set in such a way that the degree of decreasing the target vehicle speed is smoothly changed with respect to the magnitude of the operating force. In this manner, when the deceleration processing part 105 is constructed in such a way that the degree of decreasing the target vehicle speed is changed according to the magnitude of the operating force of the operation, the rider can adjust the amount of decrease in the target vehicle speed by the magnitude of the operating force. Thus, this can improve the operability of the straddle-type vehicle.

Still further, the deceleration processing part 105 may be constructed in such a way that every time the first detection part 104 detects that the accelerator 12 is operated in the further closing direction from the totally closed position of the accelerator 12, the degree of decreasing the target vehicle speed is changed according to the vehicle speed when the operation is detected. That is, for example, it suffices that the deceleration processing part 105 is constructed in the following manner: for example, when the vehicle speed when the operation is detected is 100 km/h, the target vehicle speed of the constant-speed running control is decreased by 10 km/h; and when the vehicle speed when the operation is detected is 50 km/h, the target vehicle speed of the constant-speed running control is decreased by 5 km/h. In this case, it suffices that the correlation between the vehicle speed when the operation is detected and the degree of decreasing the target vehicle speed is previously set and that the degree of decreasing the target vehicle speed is determined on the basis of the set correlation.

Still further, the construction of the deceleration processing part 105 in which every time the first detection part 104 detects that the accelerator 12 is operated in the further closing direction from the totally closed position of the accelerator 12, the degree of decreasing the target vehicle speed is changed according to the vehicle speed when the operation is detected is not limited to the construction in the above-mentioned embodiment. As another embodiment, for example, the deceleration processing part 105 may be constructed in such a way that a rate at which the target vehicle speed is decreased with respect to time when the accelerator 12 is operated in the closing direction is determined in advance and that the target vehicle speed is decreased by the rate. Specifically, for example, it suffices that the rate at which the target vehicle speed is decreased with respect to time when the operation is detected is determined to be 10 % in advance. In this case, in the case where the constant-speed running control is performed at a target vehicle speed of 100 km/h, when the first detection part 104 detects the operation, the target vehicle speed is deceased by 10 km/h and hence the target vehicle speed is brought to 90 km/h. Further, in the case where the constant-speed running control is performed at a target vehicle speed of 90 km/h, when the first detection part 104 detects the operation, the target vehicle speed is deceased by 9 km/h and hence the target vehicle speed is brought to 81 km/h. In this manner, for example, it is also recommendable that the rate at which the target vehicle speed is decreased with respect to time when the accelerator 12 is operated in the closing direction is determined in advance and that, every time the first detection part 104 detects the operation, the target vehicle speed is decreased by the rate according to the target vehicle speed at that time.

Moreover, when the deceleration processing part 105 decreases the target vehicle speed, the deceleration processing part 105 may change the degree of decreasing the target vehicle speed according to the opening of the throttle valve when the first detection part 104 detects the above-mentioned operation. That is, in this case, as shown in Fig. 1, the deceleration processing part 105 may change the degree of decreasing the target vehicle speed on the basis of the information of the opening of the throttle valve 14 detected by the throttle position sensor 24 when the first detection part 104 detects the above-mentioned operation. Further, the deceleration processing part 105 may be constructed in the following manner: that is, when the deceleration processing part 105 decreases the target vehicle speed, the deceleration processing part 105 changes the degree of decreasing the target vehicle speed according to a driving torque when the first detection part 104 detects the above-mentioned operation. That is, in this case, as for the driving torque, although not shown, the driving torque of the crankshaft of the engine of the straddle-type vehicle, the main shaft after a first deceleration, or the driving shaft of the rear wheel is detected, and the deceleration processing part 105 may be constructed in such a way as to change the degree of decreasing the target vehicle speed on the basis of the driving torque when the first detection part 104 detects the above-mentioned operation.

In this manner, the deceleration processing part 105 may be constructed in such a way as to decrease the target vehicle speed stored in the first storage part 101 every time the first detection part 104 detects the above-mentioned operation. In that case, when the deceleration processing part 105 decreases the target vehicle speed, the deceleration processing part 105 may decrease the target vehicle speed by a previously determined speed. Moreover, the deceleration processing part 105 may be constructed in the following manner: that is, when the deceleration processing part 105 decreases the target vehicle speed, the deceleration processing part 105 changes the degree of decreasing the target vehicle speed according to the magnitude of the operating force. Further, the deceleration processing part 105 may be constructed in the following manner: that is, when the deceleration processing part 105 decreases the target vehicle speed, the deceleration processing part 105 changes the degree of decreasing the target vehicle speed according to the vehicle speed when the first detection part 104 detects the above-mentioned operation.

Further, in the above-mentioned embodiment, the pressure detection means 40 fixed to the accelerator 12 has been described as an example of the sensor for detecting the operation and the operating force when the accelerator 12 is operated in the further closing direction from the totally closed position of the accelerator 12, but the position where the pressure detection means 40 is fixed is not limited to the accelerator 12. For example, as for the position where the pressure detection means 40 performing the function is fixed, in the above-mentioned embodiment, as shown in Fig. 1, the pulley 42 is fixed to the accelerator 12 by the use of the wire 41, and when the accelerator 12 is turned, the pulley 42 is turned: for this reason, the pulley 42 may have a sensor fixed thereto, the sensor detecting the operation and the operating force when the accelerator 12 is operated in the further closing direction from the totally closed position of the accelerator 12.

The control device 100 of the straddle-type vehicle can be mounted in various kinds of straddle-type vehicles. Here, "the straddle-type vehicle" in this application includes a two-wheeled motor vehicle such as a motorcycle including a motor-assisted bicycle (motorbike) and a scooter. Moreover, "the straddle-type vehicle" includes not only the two-wheeled motor vehicle but also a four-wheeled buggy (ATV: All Terrain Vehicle) and a snowmobile.

Furthermore, in the above-mentioned embodiment, the construction in which an internal combustion engine having its output adjusted by the opening of the throttle valve is used as the driving source (engine) has been described as an example. In this case, the control device 100 for a straddle-type vehicle is provided with the throttle valve opening control part 103 for controlling the opening of the throttle valve 14 as an output control part. Here, in the straddle-type vehicle according to the present invention, the driving source is not limited to the internal combustion engine. Other driving source such as an electric motor can be employed as the driving source for driving the straddle-type vehicle. In this case, it suffices that the output control part 103 has the function of controlling the output of the driving source.

### Description of the Reference Numerals

- 10-: straddle-type vehicle
- 11-: clutch lever
- 12-: accelerator
- 13-: front brake lever
- 14-: throttle valve
- 15-: rear brake pedal
- 22-: accelerator position sensor
- 24-: throttle position sensor
- 31-: vehicle speed sensor
- 32-: engine revolution speed sensor
- 33-: axle of rear wheel
- 34-: engine (driving source)
- 36-: intake passage
- 40-: detection means for detecting operation
- 41-: wire
- 42-: pulley
- 45-: actuator
- 46-: gear
- 47-: rotary shaft of throttle valve
- 50-: main switch for starting whole system of straddle-type vehicle
- 51-: switch for starting constant-speed running control
- 52-: operation part
- 53-: display part
- 61-: first switch (acceleration/ vehicle speed setting switch)
- 62-: second switch (deceleration/ resume switch)
- 63-: third switch (cancel switch)
- 100-: control device
- 101-: first storage part
- 102-: second storage part
- 103-: throttle valve opening control part (output control part)
- 104-: first detection part
- 105-: deceleration processing part
- 106-: second detection part
- 107-: first setting part

## Claims

1. A control device for a straddle-type vehicle that performs constant-speed running control for a straddle-type vehicle, the control device comprising:
a first storage means for storing a target vehicle speed of constant-speed running;
a first detection means for detecting that an accelerator is operated in a further closing direction from a totally closed position of the accelerator;
**characterized by** a deceleration processing means that decreases the target vehicle speed stored in the first storage means when the first detection means detects the operation during constant-speed running control.

2. The control device for a straddle-type vehicle as claimed in claim 1, wherein the deceleration processing means decreases the target vehicle speed stored in the first storage means while the first detection means detects the operation.

3. The control device for a straddle-type vehicle as claimed in claim 2, wherein the deceleration processing means decreases the target vehicle speed stored in the first storage means at a rate previously determined with respect to time while the first detection means detects the operation.

4. The control device for a straddle-type vehicle as claimed in claim 3, wherein the deceleration processing means changes the rate according to a magnitude of an operating force of the operation.

5. The control device for a straddle-type vehicle as claimed in claim 4, comprising:
a second detection means for detecting a magnitude of the operating force of the operation; and
a first setting means for setting a relationship between the magnitude of the operating force of the operation detected by the second detection means and the rate,
wherein the deceleration processing means changes the rate according to a magnitude of the operating force of the operation detected by the second detection means on the basis of the relationship between the magnitude of the operating force of the operation and the rate, the relationship being set by the first setting means.

6. The control device for a straddle-type vehicle as claimed in claim 1,
wherein the deceleration processing means decreases the target vehicle speed stored in the first storage means at an deceleration previously determined while the first detection means detects the operation.

7. The control device for a straddle-type vehicle as claimed in claim 1,
wherein the deceleration processing means decreases the target vehicle speed stored in the first storage means every time the first detection means detects the operation.

8. The control device for a straddle-type vehicle as claimed in claim 7,
wherein when the deceleration processing means decreases the target vehicle speed, the deceleration processing means decreases the target vehicle speed by a previously determined speed.

9. The control device for a straddle-type vehicle as claimed in claim 7,
wherein when the deceleration processing means decreases the target vehicle speed, the deceleration processing means changes a degree of decreasing the target vehicle speed according to a magnitude of an operating force of the operation.

10. The control device for a straddle-type vehicle as claimed in claim 7,
wherein when the deceleration processing means decreases the target vehicle speed, the deceleration processing means changes a degree of decreasing the target vehicle speed according to a vehicle speed when the first detection means detects the operation.

11. The control device for a straddle-type vehicle as claimed in claim 7,
wherein when the deceleration processing means decreases the target vehicle speed, the deceleration processing means changes a degree of decreasing the target vehicle speed according to an opening of a throttle valve when the first detection means detects the operation.

12. The control device for a straddle-type vehicle as claimed in claim 7,
wherein when the deceleration processing means decreases the target vehicle speed, the deceleration processing means changes a degree of decreasing the target vehicle speed according to a driving torque when the first detection means detects the operation.

13. A straddle-type vehicle mounted with the control device for a straddle-type vehicle as claimed in any one of claims 1 to 12.

14. The straddle-type vehicle as claimed in claim 13, comprising
operation detection means for detecting that an accelerator is operated in a further closing direction from a totally closed position of the accelerator, wherein the first detection means of the control device detects the operation on the basis of a detection signal detected by the operation detection means.

15. A straddle-type vehicle mounted with the control device for a straddle-type vehicle as claimed in claim 5 or claim 9, comprising
operation detection means for detecting a magnitude of an operating force when an accelerator is operated in a further closing direction from a totally closed position of the accelerator,
wherein the second detection means detects a magnitude of the operating force on the basis of a detection signal detected by the operation detection means.

16. The straddle-type vehicle as claimed in claim 13,
wherein the straddle-type vehicle is provided with an internal combustion engine as a driving source and is provided with a mechanism for adjusting an output of the internal combustion engine by an opening of a throttle valve, and
wherein the control device for a straddle-type vehicle controls the opening of the throttle valve in such a way that the straddle-type vehicle runs constantly at a target vehicle speed stored in the first storage means during the constant-speed running control.

## Patentansprüche

1. Steuervorrichtung für ein Spreizsitz-Fahrzeug, die Steuerung für Fahrt mit konstanter Geschwindigkeit für ein Spreizsitz-Fahrzeug durchführt, wobei die Steuervorrichtung umfasst:
eine erste Speichereinrichtung, mit der eine Soll-Fahrzeuggeschwindigkeit für Fahrt mit konstanter Geschwindigkeit gespeichert wird;
eine erste Erfassungseinrichtung, mit der erfasst wird, dass ein Gasgriff von einer vollständig geschlossenen Position des Gasgriffs ausgehend in einer Richtung zum weiteren Schließen betätigt wird; **gekennzeichnet durch**
eine Verlangsamungs-Verarbeitungseinrichtung, die die in der ersten Speichereinrichtung gespeicherte Soll-Fahrzeuggeschwindigkeit verringert, wenn die erste Erfassungseinrichtung die Betätigung bei Steuerung für Fahrt mit konstanter Geschwindigkeit erfasst.

2. Steuervorrichtung für ein Spreizsitz-Fahrzeug nach Anspruch 1, wobei die Verlangsamungs-Verarbeitungseinrichtung die in der ersten Speichereinrichtung gespeicherte Soll-Fahrzeuggeschwindigkeit verringert, wenn die erste Erfassungseinrichtung die Betätigung erfasst.

3. Steuervorrichtung für ein Spreizsitz-Fahrzeug nach Anspruch 2, wobei die Verlangsamungs-Verarbeitungseinrichtung die in der ersten Speichereinrichtung gespeicherte Soll-Fahrzeuggeschwindigkeit mit einer Rate verringert, die zuvor bezüglich der Zeit bestimmt wurde, während die erste Erfassungseinrichtung die Betätigung erfasst.

4. Steuervorrichtung für ein Spreizsitz-Fahrzeug nach Anspruch 3, wobei die Verlangsamungs-Verarbeitungseinrichtung die Rate entsprechend einem Betrag einer Betätigungskraft der Betätigung ändert.

5. Steuervorrichtung für ein Spreizsitz-Fahrzeug nach Anspruch 4, die umfasst:
eine zweite Erfassungseinrichtung zum Erfassen eines Betrages der Betätigungskraft der Betätigung; und
eine erste Einstelleinrichtung zum Einstellen einer Beziehung zwischen dem durch die zweite Erfassungseinrichtung erfassten Betrag der Betätigungskraft der Betätigung und der Rate,
wobei die Verlangsamungs-Verarbeitungseinrichtung die Rate entsprechend einem durch die zweite Erfassungseinrichtung erfassten Betrag der Betätigungskraft der Betätigung auf Basis der Beziehung zwischen dem Betrag der Betätigungskraft der Betätigung und der Rate ändert, und die Beziehung durch die erste Einstelleinrichtung eingestellt wird.

6. Steuervorrichtung für ein Spreizsitz-Fahrzeug nach Anspruch 1,
wobei die Verlangsamungs-Verarbeitungseinrichtung die in der ersten Speichereinrichtung gespeicherte Soll-Fahrzeuggeschwindigkeit mit einer Verlangsamung verringert, die zuvor bestimmt wurde, während die erste Erfassungseinrichtung die Betätigung erfasst.

7. Steuervorrichtung für ein Spreizsitz-Fahrzeug nach Anspruch 1,
wobei die Verlangsamungs-Verarbeitungseinrichtung die in der ersten Speichereinrichtung gespeicherte Soll-Fahrzeuggeschwindigkeit immer dann verringert, wenn die erste Erfassungseinrichtung die Betätigung erfasst.

8. Steuervorrichtung für ein Spreizsitz-Fahrzeug nach Anspruch 7, wobei wenn die Verlangsamungs-Verarbeitungseinrichtung die Soll-Fahrzeuggeschwindigkeit verringert, die Verlangsamungs-Verarbeitungseinrichtung die Soll-Fahrzeuggeschwindigkeit um eine zuvor bestimmte Geschwindigkeit verringert.

9. Steuervorrichtung für ein Spreizsitz-Fahrzeug nach Anspruch 7,
wobei, wenn die Verlangsamungs-Verarbeitungseinrichtung die Soll-Fahrzeuggeschwindigkeit verringert, die Verlangsamungs-Verarbeitungseinrichtung einen Grad der Verringerung der Soll-Fahrzeuggeschwindigkeit entsprechend einem Betrag einer Betätigungskraft der Betätigung ändert.

10. Steuervorrichtung für Spreizsitz-Fahrzeug nach Anspruch 7,
wobei, wenn die Verlangsamungs-Verarbeitungseinrichtung die Soll-Fahrzeuggeschwindigkeit verringert, die Verlangsamungs-Verarbeitungseinrichtung einen Grad der Verringerung der Soll-Fahrzeuggeschwindigkeit entsprechend einer Fahrzeuggeschwindigkeit ändert, wenn die erste Erfassungseinrichtung die Betätigung erfasst.

11. Steuervorrichtung für ein Spreizsitz-Fahrzeug nach Anspruch 7,
wobei, wenn die Verlangsamungs-Verarbeitungseinrichtung die Soll-Fahrzeuggeschwindigkeit verringert, die Verlangsamungs-Verarbeitungseinrichtung einen Grad der Verringerung der Soll-Fahrzeuggeschwindigkeit entsprechend einer Öffnung eines Drosselventils verringert, wenn die erste Erfassungseinrichtung die Betätigung erfasst.

12. Steuervorrichtung für ein Spreizsitz-Fahrzeug nach Anspruch 7,
wobei, wenn die Verlangsamungs-Verarbeitungseinrichtung die Soll-Fahrzeuggeschwindigkeit verringert, die Verlangsamungs-Verarbeitungseinrichtung einen Grad der Verringerung der Soll-Fahrzeuggeschwindigkeit entsprechend einem Antriebsdrehmoment ändert, wenn die erste Erfassungseinrichtung die Betätigung erfasst.

13. Spreizsitz-Fahrzeug, das mit der Steuervorrichtung für ein Spreizsitz-Fahrzeug nach einem der Ansprüche 1 bis 12 versehen ist.

14. Spreizsitz-Fahrzeug nach Anspruch 13, das umfasst:
eine Betätigungs-Erfassungseinrichtung, mit der erfasst wird, dass ein Gasgriff von einer vollständig geschlossenen Position des Gasgriffs aus in einer Richtung zum weiteren Schließen betätigt wird, wobei die erste Erfassungseinrichtung der Steuervorrichtung die Betätigung auf Basis eines durch die Betätigungs-Erfassungseinrichtung erfassten Erfassungssignals erfasst.

15. Spreizsitz-Fahrzeug, das mit der Steuervorrichtung für ein Spreizsitz-Fahrzeug nach Anspruch 5 oder Anspruch 9 versehen ist, wobei es umfasst:
eine Betätigungs-Erfassungseinrichtung, mit der ein Betrag einer Betätigungskraft erfasst wird, wenn ein Gasgriff von einer vollständig geschlossenen Position des Gasgriffs aus in einer Richtung zum weiteren Schließen betätigt wird,
wobei die zweite Erfassungseinrichtung einen Betrag der Betätigungskraft auf Basis eines durch die Betätigungs-Erfassungseinrichtung erfassten Erfassungssignals erfasst.

16. Spreizsitz-Fahrzeug nach Anspruch 13,
wobei das Spreizsitz-Fahrzeug mit einem Verbrennungsmotor als einer Antriebsquelle versehen ist und mit einem Mechanismus zum Regulieren einer Ausgangsleistung des Verbrennungsmotors mittels eines Öffnens eines Drosselventils versehen ist, und
wobei die Steuervorrichtung für ein Spreizsitz-Fahrzeug die Öffnung des Drosselventils so steuert, dass das Spreizsitz-Fahrzeug während der Steuerung für Fahrt mit konstanter Geschwindigkeit konstant mit einer in der ersten Speichereinrichtung gespeicherten Soll-Fahrzeuggeschwindigkeit fährt.

## Revendications

1. Dispositif de commande pour un véhicule du type à enfourcher, qui réalise une commande de conduite à vitesse constante pour un véhicule du type à enfourcher, le dispositif de commande comprenant :
des premiers moyens de mémorisation pour stocker une vitesse de véhicule visée de conduite à vitesse constante ;
des premiers moyens de détection pour détecter qu'un accélérateur est actionné dans le sens d'une plus grande fermeture, à partir d'une position complètement fermée de l'accélérateur ;
**caractérisé par** des moyens de traitement de décélération qui réduisent la vitesse de véhicule visée stockée dans les premiers moyens de mémorisation quand les premiers moyens de détection détectent l'actionnement pendant la commande de conduite à vitesse constante.

2. Dispositif de commande pour un véhicule du type à enfourcher tel que revendiqué dans la revendication 1, dans lequel les moyens de traitement de décélération réduisent la vitesse de véhicule visée stockée dans les premiers moyens de mémorisation pendant que les premiers moyens de détection détectent l'actionnement.

3. Dispositif de commande pour un véhicule du type à enfourcher tel que revendiqué dans la revendication 2, dans lequel les moyens de traitement de décélération réduisent la vitesse de véhicule visée stockée dans les premiers moyens de mémorisation, à un taux déterminé précédemment par rapport au temps, pendant que les premiers moyens de détection détectent l'actionnement.

4. Dispositif de commande pour un véhicule du type à enfourcher tel que revendiqué dans la revendication 3, dans lequel les moyens de traitement de décélération modifient le taux selon une magnitude d'une force d'actionnement de l'actionnement.

5. Dispositif de commande pour un véhicule du type à enfourcher tel que revendiqué dans la revendication 4, comprenant :
des seconds moyens de détection pour détecter une magnitude de la force d'actionnement de l'actionnement ; et
des premiers moyens de réglage pour régler une relation entre la magnitude de la force d'actionnement de l'actionnement détectée par les seconds moyens de détection, et le taux,
étant précisé que les moyens de traitement de décélération modifient le taux selon une magnitude de la force d'actionnement de l'actionnement détectée par les seconds moyens de détection sur la base de la relation entre la magnitude de ladite force d'actionnement et le taux, cette relation étant réglée par les premiers moyens de réglage.

6. Dispositif de commande pour un véhicule du type à enfourcher tel que revendiqué dans la revendication 1, dans lequel les moyens de traitement de décélération réduisent la vitesse de véhicule visée stockée dans les premiers moyens de mémorisation, jusqu'à une décélération déterminée précédemment pendant que les premiers moyens de détection détectent l'actionnement.

7. Dispositif de commande pour un véhicule du type à enfourcher tel que revendiqué dans la revendication 1, dans lequel les moyens de traitement de décélération réduisent la vitesse de véhicule visée stockée dans les premiers moyens de mémorisation, à chaque fois que les premiers moyens de détection détectent l'actionnement.

8. Dispositif de commande pour un véhicule du type à enfourcher tel que revendiqué dans la revendication 7, dans lequel les moyens de traitement de décélération, quand ils réduisent la vitesse de véhicule visée, réduisent la vitesse de véhicule visée suivant une vitesse déterminée précédemment.

9. Dispositif de commande pour un véhicule du type à enfourcher tel que revendiqué dans la revendication 7, dans lequel les moyens de traitement de décélération, quand ils réduisent la vitesse de véhicule visée, modifient un degré de réduction de la vitesse de véhicule visée selon une magnitude d'une force d'actionnement de l'actionnement.

10. Dispositif de commande pour un véhicule du type à enfourcher tel que revendiqué dans la revendication 7, dans lequel les moyens de traitement de décélération, quand ils réduisent la vitesse de véhicule visée, modifient un degré de réduction de la vitesse de véhicule visée selon une vitesse de véhicule, quand les premiers moyens de détection détectent l'actionnement.

11. Dispositif de commande pour un véhicule du type à enfourcher tel que revendiqué dans la revendication 7, dans lequel les moyens de traitement de décélération, quand ils réduisent la vitesse de véhicule visée, modifient un degré de réduction de la vitesse de véhicule visée selon une ouverture du papillon des gaz quand les premiers moyens de détection détectent l'actionnement.

12. Dispositif de commande pour un véhicule du type à enfourcher tel que revendiqué dans la revendication 7, dans lequel les moyens de traitement de décélération, quand ils réduisent la vitesse de véhicule visée, modifient un degré de réduction de la vitesse de véhicule visée selon un couple moteur quand les premiers moyens de détection détectent l'actionnement.

13. Véhicule du type à enfourcher équipé du dispositif de commande pour véhicule du type à enfourcher tel que revendiqué dans l'une quelconque des revendications 1 à 12.

14. Véhicule du type à enfourcher tel que revendiqué dans la revendication 13, comprenant des moyens de détection d'actionnement pour détecter qu'un accélérateur est actionné dans le sens d'une plus grande fermeture, à partir d'une position complètement fermée de l'accélérateur, les premiers moyens de détection du dispositif de commande détectant l'actionnement sur la base d'un signal de détection détecté par les moyens de détection d'actionnement.

15. Véhicule du type à enfourcher équipé du dispositif de commande pour un véhicule du type à enfourcher tel que revendiqué dans la revendication 5 ou dans la revendication 9, comprenant des moyens de détection d'actionnement pour détecter une magnitude pour une force d'actionnement quand un accélérateur est actionné dans le sens d'une plus grande fermeture, à partir d'une position complètement fermée de l'accélérateur, étant précisé que les seconds moyens de détection détectent une magnitude de la force d'actionnement sur la base d'un signal de détection détecté par les moyens de détection d'actionnement.

16. Véhicule du type à enfourcher tel que revendiqué dans la revendication 13,
étant précisé que ledit véhicule du type à enfourcher est équipé d'un moteur à combustion interne, comme source motrice, et est équipé d'un mécanisme pour ajuster une puissance du moteur à combustion interne grâce à une ouverture d'un papillon des gaz, et
que le dispositif de commande pour un véhicule du type à enfourcher commande l'ouverture du papillon des gaz de telle sorte que ledit véhicule roule de manière constante à une vitesse de véhicule visée stockée dans les premiers moyens de mémorisation, pendant la commande de conduite à vitesse constante.
